# EUROPEAN PATENT APPLICATION

(11) **EP 4 474 222 A1**
(43) Date of publication of application: **11.12.2024**
(21) Application number: 24315263.4
(22) Date of filing: 03.06.2024
(51) Int. Cl.: B60R 16/02, F16L 3/223, H02G 3/32

(54) **IMPROVED CABLE SUPPORT SYSTEM FOR ELECTRICAL CABLES FOR A VEHICLE**

(30) Priority: 09.06.2023 IT 202300011856
(71) Applicant: IVECO FRANCE S.A.S., 69200 Vénissieux (FR)
(72) Inventor: Mazoue, Gael, 69200 VENISSIEUX (FR)
(74) Representative: Studio Torta S.p.A.

(57) **Abstract**

Support system (1) for supporting at least a wire (W) of a vehicle on a vehicular portion (2) and comprising a support element (5) and a coupler (6), the coupler (6) being configured to be fixedly carried by the vehicular portion (2), the support element (5) comprising a main portion (5') defining a plurality of openings (5"), a first opening (5") being configured to house the coupler (6) and at least a second opening (5") being configured to house a respective wire (W).

## Description

### CROSS-REFERENCE TO RELATED APPLICATIONS

This patent application claims priority from Italian patent application no. 102023000011856 filed on June 9, 2023, the entire disclosure of which is incorporated herein by reference.

### TECHNICAL FIELD

The present invention concerns a support system for cable fixation.

The present invention finds its preferred, although not exclusive, application in electrical cable support in a vehicle, such as a bus. Reference will be made to this application by way of example below.

### BACKGROUND OF THE INVENTION

Vehicles tends to be more and more electrified in order to reduce the emission of fossil fuel emissions. To this aims, vehicles are current produced as hybrid vehicle or purely electric vehicles or fuel-cells vehicles.

These vehicles, more than internal combustion engine ones, needs a lot of electric cables for connecting energy storing means such as batteries with the electric machines that uses or generates the electrical energy and with energy distribution means, such as inverters.

In particular, such electrical cables needs to sustain high voltage that are not usual on standard internal combustion engine.

Therefore, it is needed to manage the electrical cables along their length on the vehicle body to avoid undesired interferences/contact between themselves and with the vehicle body itself.

Moreover, it is requested to reduce the weight of the vehicle and its manufacturing costs.

All the above, is required while maintaining a high versatility in managing the orientation of the cable to allow to pursue different paths, if needed.

An aim of the present invention is to solve the aforementioned drawbacks in a cost-effective and optimized manner.

### SUMMARY OF THE INVENTION

The aforementioned aim is reached by a support system for cables and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic exploded section view of a cable support system according to the invention;
- Figure 2 is a schematic exploded section view of a cable support system according to the invention;
- Figures 3 and 4 are partially exploded perspective views of a cable support system according to the invention;
- Figures 5 and 6 are perspective view of a portion of the cable support system according to the invention; and
- Figures 7 and 8 are top schematic views showing the mounting of a cable support system according to the invention.

### DETAILED DESCRIPTION OF THE INVENTION

In the attached figures it is shown an assembly comprising a support system 1 for supporting at least one cable, in particular a plurality of electric cables W and a portion 2 of a vehicle (not shown in its entirety).

In particular, portion 2 is a portion fixedly carried by vehicular chassis and may be a portion making part of the roof, or the floor of or a lateral and/or front and/or rear walls of the vehicle.

In the disclosed example, portion 2 is substantially a flange extending from an element 3 carried by vehicular chassis. For sake of example, portion 2 and element 3 are represented as a one-piece element.

In detail, element 3 extends along a first axis A and the portion 2 extends from the element 3 along a second axis B that is preferably perpendicular with respect to first axis A.

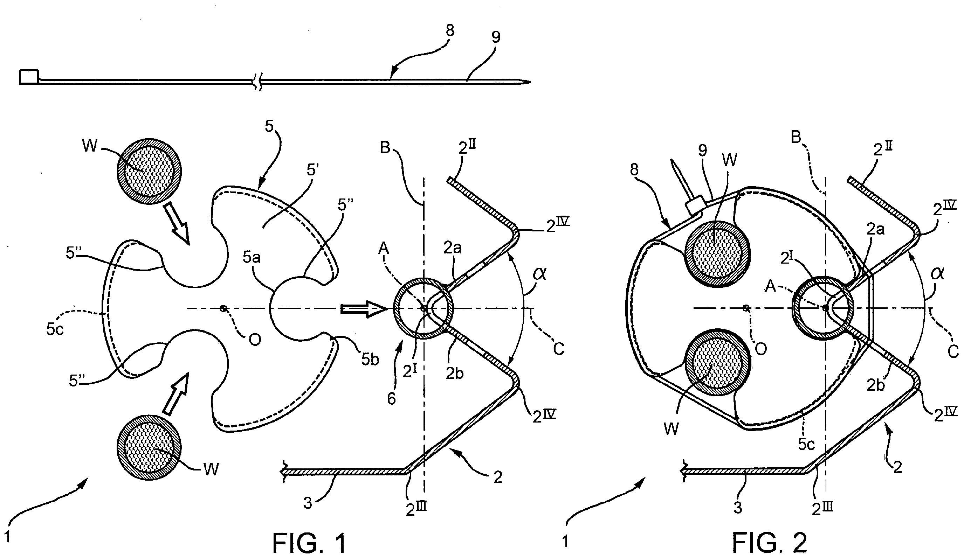

Portion 2 (see figures 1, 2, 5 and 6 into detail) defines a shape extending from a lower extremity 2', connected to element 3, towards an upper extremity 2" that is preferably free and an intermediate protrusion 2‴ that extends between the lower and upper extremities 2', 2" along a third axis C that is perpendicular to aforementioned first and second axis A, B.

In detail, the intermediate protrusion 2‴ extends on the side of element 3 from lower and upper extremities 2', 2". In further detail, the portion 2 has a "W" shape, therefore the upper and lower extremities 2', 2" preferably extends on the opposite side of intermediate protrusion 2‴ along third axis C direction thereby defining two respective rear protrusions 2^{IV} that are preferably of the same shape and dimension of the intermediate protrusion 2‴.

Preferably, the intermediate protrusion 2‴ has a substantial triangular shape, i.e. a trianguloid shape, thereby being defined by a pair of sides 2a, 2b that converge in a vertex and inclined of a pre-set angle value α.

In the above-mentioned advantageous embodiment of "W" shape also rear protrusions 2^{IV} have a similar shape, thereby sharing one of the sides 2a, 2b with the intermediate protrusion 2‴ .

The support system 1 comprises essentially a support element 5 and a coupler 6. The coupler 6 is configured to be selectively fixed to the portion 2 and is configured to carry the support element 5 in an adjustable manner about at least one among the aforementioned axis A, B, C, in particular on a linear movement about a linear and rotational movements along first axis A.

In detail, the coupler 6 and the support element 5 configured to be shape-coupled, once mounted, one in the other. In particular, the coupler 6 has a curved shape, preferably circular.

Accordingly, the support element 5 comprises a main portion 5' and at least a first opening 5" configured to be shaped to fit-engage with the coupler 6 external surface. In particular, as said, the shape coupling of coupler 6 within first opening 5" is realized to allow a predefined movement as detailed above.

Alternatively, the coupling may be realized with a preload, i.e. with a radial interference, to avoid any relative movement between coupler 6 and support element 5, once coupled.

In detail, the portion 2 defines an opening 7 configured to house the coupler 6. In detail, opening 7 is configured to house a portion of the coupler 6 so that a remaining portion thereof extends along third axis C direction in order to be housed within the first opening 5" of the support element 5.

Preferably, the opening 7 is defined in the intermediate portion 2‴, and preferably in the vertex of the triangular shape thereof, if so configured.

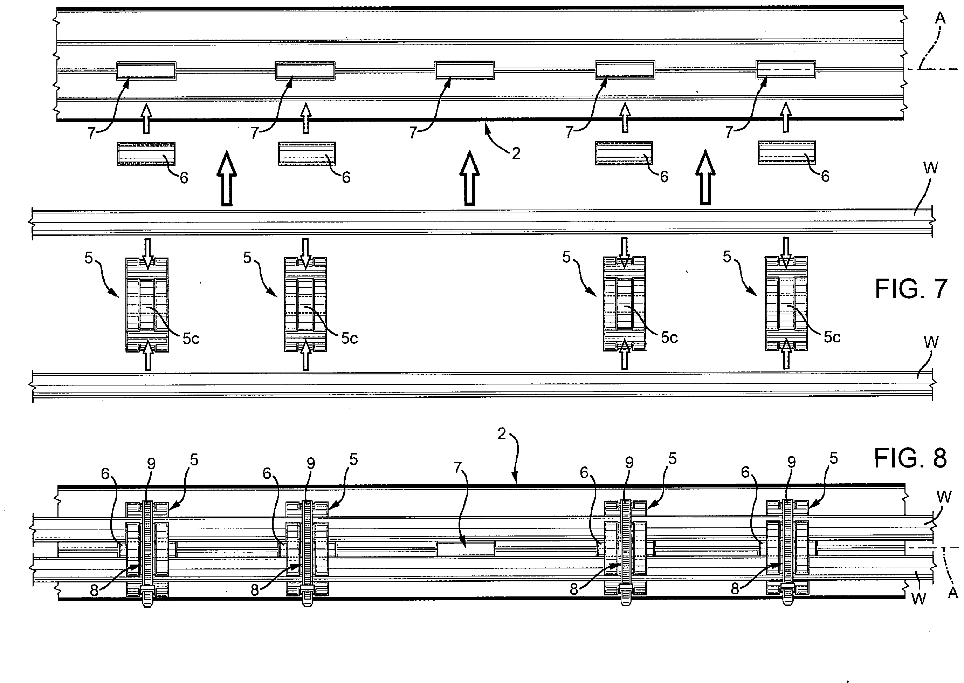

Advantageously, the portion 2, defines a plurality of openings 7 (see figure 7) along its extension along axis A thereby allowing the positioning of coupler 6 in different position s along such axis A.

The coupler 6 is configured to be inserted into opening 7 in order to be fixed to portion 2. In particular, coupler 6 may be fixed to the portion 2 via fixing means, such as splines or by a fixing process, such as gluing or welding.

In a not shown embodiment, the coupler 6 may be realized as one piece within the portion 2, thereby avoiding the presence of the above described opening 7.

The above mentioned first opening 5" of the support element 5, defines a coupling profile 5a, configured to cooperate with the external surface of the coupler 6 and therefore extending in a circumferential direction about an axis parallel to first axis A.

If the coupler 6 is circular, then the coupling profile 5a is realized as an arc of circumference.

The first opening 5" further defines a pair of radial profiles 5b that extends from the edges of the coupling profile 5a radially with respect to the aforementioned axis parallel to first axis A.

In particular, radial profiles 5b are linear and are angularly spaced about axis A direction of a pre-set angle value that is preferably the same pre-set angle value α of sides 2a, 2b. In this way, radial profiles 2a, 2b acts as end-stops for angular movement of support element 5 about the hinge realized between the coupling of coupler 6 within opening 5".

As shown in the drawings, the second openings 5" are preferably equally spaced in a circumferential direction about axis O with respect to first openings 5". Further preferably, first and second openings 5" have the same shape, i.t. comprising a coupling profile 5a and a radial profile 5b.

The support system 1 further comprising retaining means 8 configured to avoid movements of wires W from second openings 5" and/or of coupler 6 from first opening 5".

In particular, such retaining means 8 comprises a cable tie 9 configured to be wrapped around the lateral surface of the support element 5 in order to laterally close first and second openings 5" avoiding therefore unwanted exist of wires W or of coupler 6.

In particular, the cable tie 9 is partially houses within a lateral seat 5c realized as a groove in the lateral surface of the support element 5 and in particular connecting two radial profiles 5b of two openings 5', 5" together.

In all the above described embodiments, it is noticed that support element 5 is advantageously realized in as electrically insulated material, such as a polymeric material, in particular a plastic material.

Furthermore, the coupler 6 may be realized in different material, even if preferably in metallic material in order to be, if needed, welded on portion 2.

The operation of the embodiment of the invention as described above is the following.

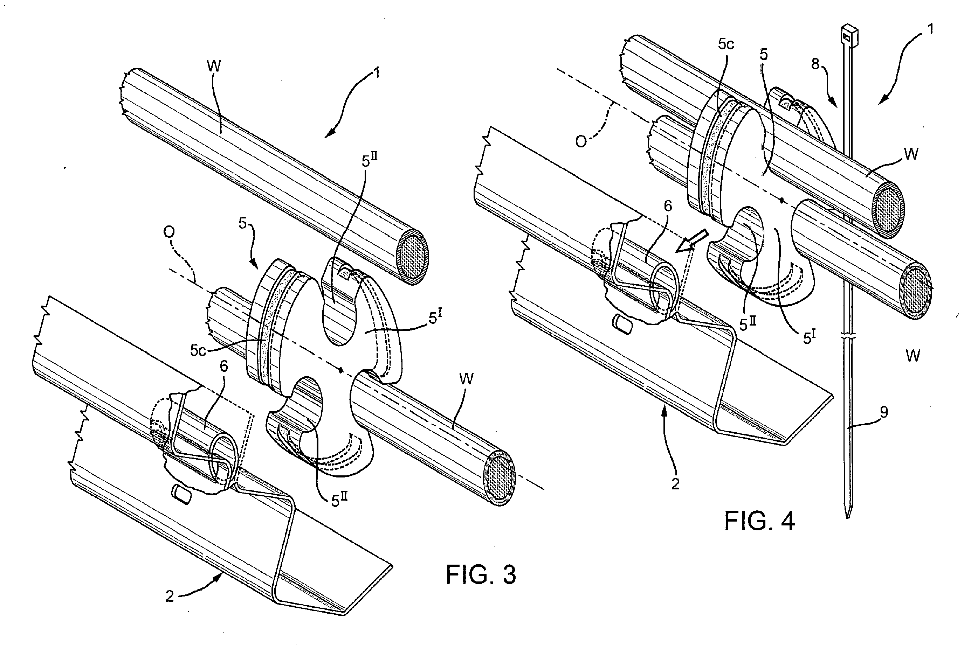

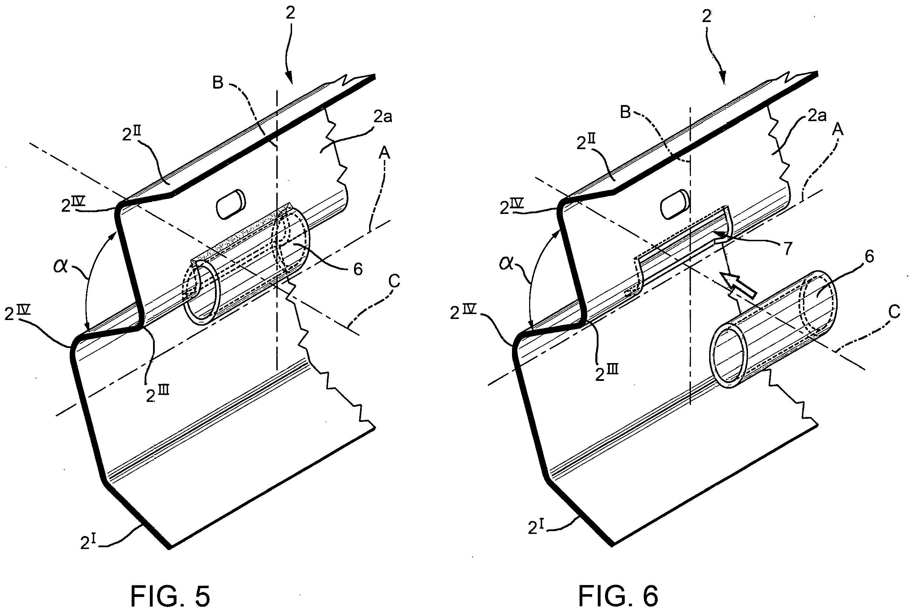

The coupler 6 may be fixed in the needed position along axis A on openings 7 (see figures 5, 6 or 7). Then, for each coupler 6 a support element 5 may be coupled herewith via first opening 5' and wires W may be inserted in second openings 5" (see figures 1, 3 or 7). One coupler together, the retaining means 8 maintain the wires W locked in the respective openings 5" and the coupler 6 in the opening 7 thereby avoiding undesired movements of such elements.

In view of the foregoing, the advantages of a support system according to the invention are apparent.

Thanks to the proposed support system it is possible to provide a versatile, with high degree of freedom of adjustment and compact support system for supporting wires in a vehicle.

In particular, it is possible to support wires in order to maintain these latter spaced one with respect to the other and the wires further spaced with respect to vehicular body.

In this way, it is avoid to both have undesired electrical bridges and furthermore to avoid mutual electromagnetic interferences.

It is clear that modifications can be made to the described support system which do not extend beyond the scope of protection defined by the claims.

For example, the number and shapes of openings may vary with respect to the disclosed ones.

Similarly, shape of coupler and of support element may differ. Furthermore, retaining means may be substituted by equivalent means such as splines or other locking means.

Clearly, the portion of the vehicle disclosed defining the openings housing the coupler may be of any shape and in any location on the vehicle.

## Claims

1. Support system (1) for supporting at least a wire (W) of a vehicle on a vehicular portion (2), said support system (1) comprising a support element (5) and a coupler (6), said coupler (6) being configured to be fixedly carried by said vehicular portion (2), said support element (5) comprising a main portion (5') defining a plurality of openings (5"), a first opening (5") being configured to house said coupler (6) and at least a second opening (5") being configured to house a respective wire (W).

2. Support system according to claim 1, wherein said openings (5") are angularly equally circumferentially spaced about an axis (O) of said main portion (5').

3. Support system according to claim 1 or 2, wherein said openings (5") are dimensioned in order to house the respective coupler (6) or wire (W) with radial interference.

4. Support system according to any of the preceding claims, wherein said openings (5") have the same shape.

5. Support system according to any of the preceding claims, wherein said openings (5") comprise a curved profile (5a) configured to cooperate at contact with the external surface of said respective coupler (6) or wire (W).

6. Support system according to claim 5, further comprising radial profile (5b) each extending from the ends of said curved profile (5a) in a radial direction with respect an axis (O) of said support element (5).

7. Support system according to claim 6, wherein said radial profiles (5b) are linear and inclined one with respect to the other of a pre-set angle (α).

8. Support system according to any of the preceding claims, further comprising tightening means (8) configured to avoid movements of respective coupler (6) or wire (W) from the respective opening (5").

9. Support system according to claim 8, wherein said tightening means (8) comprises a cable tie (9) configured to wrap on a lateral surface of said support element (5) to close said openings (5").

10. Support system according to claim 9, wherein said support element (5) defines a seat (5c) in its lateral surface for accommodating said cable tie (9).

11. Support system according to any of the preceding claims, wherein said support element (5) is made of electrically insulated material.

12. Support system according to any of the preceding claims, wherein said support element (5) is made of polymeric/plastic material.

13. Assembly comprising a support system (1) according to any of the preceding claims and a portion (2) extending a long a first axis (A) and configured to be carried by an element (3) carried by a vehicular chassis, said portion (2) comprising a lower extremity (2') configured to be carried by said element (3), an upper extremity (2") opposite to said lower extremity (2') along a second axis (B) inclined with respect to said first axis (B) and an intermediate protrusion (2‴) extending along a third axis (C) inclined to both said first and second axis (A, B) between said lower and upper extremities (2', 2"), said intermediate protrusion (2‴) defining a plurality of openings (7) for housing said coupler (6).

14. Assembly according to claim 13, wherein said portion (2) has a "W" cross-section along said first axis (A) .

15. Assembly according to claim 13 or 14, wherein said intermediate protrusion (2‴) has a triangoloid shape.

16. Assembly according to any of claims 13 to 15, wherein said intermediate protrusion (2‴) is defined by a pair of sides (2a, 2b) inclined together of an angle (α), said angle (α) being equal to said pre-set angle (α) of said radial profiles (5b) of said openings (5b).

17. Assembly according to any of claims 13 to 15, wherein said portion (2) is made of a single piece.

18. Vehicle comprising an element (3) carried by vehicular chassis and at least a wire (W) supported on said element (3) via a support assembly according to any of claims 13 to 17.
